# EUROPÄISCHE PATENTSCHRIFT

(11) **EP 2 962 296 B1**
(45) Veröffentlichungstag und Bekanntmachung des Hinweises auf die Patenterteilung: **31.07.2019**
(21) Anmeldenummer: 14708224.2
(22) Anmeldetag: 25.02.2014
(51) Int. Cl.: G10L 15/18, G06F 17/27

(54) **WORTWAHLBASIERTE SPRACHANALYSE UND SPRACHANALYSEEINRICHTUNG**
WORDING-BASED SPEECH ANALYSIS AND SPEECH ANALYSIS DEVICE
ANALYSE VOCALE SUR LA BASE D'UNE SÉLECTION DE MOTS ET DISPOSITIF D'ANALYSE VOCALE

(30) Priorität: 26.02.2013 DE 102013101871
(43) Veröffentlichungstag der Anmeldung: 06.01.2016
(73) Patentinhaber: PRECIRE Technologies GmbH, 52068 Aachen (DE)
(72) Erfinder: GRATZEL, Dirk C., 52076 Aachen-Lintert (DE); GREB, Christian, 52062 Aachen (DE)
(74) Vertreter: Kohlmann, Kai
(86) Internationale Anmeldenummer: PCT/EP2014/053643
(87) Internationale Veröffentlichungsnummer: WO 2014/131763

(56) Entgegenhaltungen:
- WO-A1-2005/027091
- US-A1- 2007 271 098
- FRANÇOIS MAIRESSE ET AL: "Using Linguistic Cues for the Automatic Recognition of Personality in Conversation and Text", JOURNAL OF ARTIFICIAL INTELLIGENCE RESEARCH, Bd. 30, 1. November 2007 (2007-11-01), Seiten 457-500, XP055134911,
- JENNIFER GOLBECK ET AL: "Predicting personality with social media", PROCEEDINGS OF THE 2011 EXTENDED ABSTRACTS ON HUMAN FACTORS IN COMPUTING SYSTEMS, 1. Januar 2011 (2011-01-01), Seiten 253-262, XP055135178, New York, New York, USA DOI: 10.1145/1979742.1979614 ISBN: 978-1-45-030268-5
- JENNIFER GOLBECK ET AL: "Predicting Personality from Twitter", PRIVACY, SECURITY, RISK AND TRUST (PASSAT), 2011 IEEE THIRD INTERNATIONAL CONFERENCE ON AND 2011 IEEE THIRD INTERNATIONAL CONFERNECE ON SOCIAL COMPUTING (SOCIALCOM), IEEE, 9. Oktober 2011 (2011-10-09), Seiten 149-156, XP032090193, DOI: 10.1109/PASSAT/SOCIALCOM.2011.33 ISBN: 978-1-4577-1931-8
- JAN DÖNGES: "Du bist, was du sprichst", GEHIRN UND GEIST, no. 1, 1 January 2009 (2009-01-01), pages 24-28, XP055450014,
- FRANCISCO IACOBELLI ET AL: "Large Scale Personality Classification of Bloggers", 1 January 2011 (2011-01-01), ECCV 2016 CONFERENCE; [LECTURE NOTES IN COMPUTER SCIENCE; LECT.NOTES COMPUTER], SPRINGER INTERNATIONAL PUBLISHING, CHAM, PAGE(S) 568 - 577, XP019168019, ISSN: 0302-9743 ISBN: 978-3-642-33485-6

## Beschreibung

Die Erfindung betrifft ein Verfahren zur wortwahlbasierten automatisierten Sprachanalyse und eine Sprachanalyseeinrichtung.

Die Psycholinguistik oder Sprachpsychologie befasst sich mit den Prozessen des Spracherwerbs, des Sprachverstehens (Sprachwissen) und der Sprachproduktion:
- Spracherwerb: Wie können sich Kinder sprachliches Wissen aneignen und anwenden?
- Sprachverstehen: Wodurch und mit welchem Wissen werden Bedeutungen und Sinn der Wörter, Sätze und Texte erschlossen und geschaffen?
- Sprachproduktion: Wie werden sinnvolle sprachliche Artikulationen ermöglicht?

Die Sprachpsychologen unterscheiden dabei vier aufeinander folgende Phasen:
(1) Konzeptualisierung einer auszudrückenden Idee, Gedankens oder Gefühls
(2) Erstellen eines linguistischen (Ablauf-)Plans
(3) Artikulation als Umsetzung des Planes
(4) Überwachung der Artikulation

Diese Prozesse beschäftigen sich mit den kognitiven, denk- und wissensbezogenen Aspekten der Sprache. Psychologen interessierten sich dagegen lange kaum für die Frage, wie sich die Persönlichkeit in der Sprache ausdrückt - bis auf Freud, dessen Thesen aber empirisch fruchtlos blieben.

Neben teilweise extrem zeit- und ressourcenaufwendigen subjektiv kontextbezogenen, qualitativ-inhaltlichen Analysemodellen, die sich an größeren Spracheinheiten wie Sätzen und ganzen Texten orientierten, entstanden in den 1960er und 1970er Jahren mit dem Aufkommen des Computers automatisierte, objektiv quantitativ-formale Analyseverfahren, die auf kleinen Spracheinheiten basierten, die so genannten "Wörterzählmethoden".

Die US 5,696,981 B1 offenbart ein Verfahren und eine Sprachanalyseeinrichtung zur wortwahlbasierten automatisierten Persönlichkeitsanalyse. Ein auf einem Personalcomputer gespeichertes Programm enthält Listen mit Schlüsselworten, wobei jede Liste eine Vielzahl von Worten umfasst, die mit einem von sechs Persönlichkeitstypen verbunden sind. Zur Persönlichkeitsanalyse wird eine Sprachdatei erfasst, die eine Vielzahl von Worten einer Person umfasst, die analysiert werden soll. Die Worte können beispielsweise einem Fragebogen, einem Monolog oder einem von der Person verfassten Text entstammen. Sie werden als Text in das Rechnersystem eingegeben oder bei einem Monolog durch Spracherkennung automatisch in eine Sprachdatei gewandelt. Im Rahmen der automatisierten Persönlichkeitsanalyse wird die Sprachdatei untersucht, ob sie Schlüsselworte aus den sechs Listen mit Schlüsselworten enthält. Dabei werden in einem mehrstufigen Verfahren die in der Sprachdatei aufgefundenen Schlüsselworte gewichtet und kontextabhängig auf der Basis der in den sechs Listen enthaltenen Schlüsselworte einem der sechs Persönlichkeitstypen zugeordnet. Für die Ausgabe des Ergebnisses der Persönlichkeitsanalyse werden die gewichteten Schlüsselworte für jeden der sechs Persönlichkeitstypen aufsummiert und eine prozentuale Zuordnung der Persönlichkeit zu den sechs Persönlichkeitstypen vorgenommen, die insbesondere in einem Balkendiagramm dargestellt wird.

Ein Nachteil des bekannten Verfahrens besteht darin, dass lediglich eine wortwahlbasierte automatisierte Persönlichkeitsanalyse möglich ist. Andere Merkmale der Person, von der die Sprachdatei stammt, lassen sich mit diesem Verfahren nicht ermitteln. Die einen geringen Umfang aufweisenden Schlüsselwortlisten überdecken sich nur zu einem sehr geringen Teil mit den erfassten Sprachdateien. Folglich wird bei der Persönlichkeitsanalyse nur ein kleiner Teil der Sprachdatei berücksichtigt. Hinzukommt, dass die Schlüsselwortlisten und die darauf bezogene Auswertung statisch sind und daher die Güte der Persönlichkeitsanalyse in hohem Maße von der Auswahl der Schlüsselworte abhängt.

Aus FRANCOIS MAIRESSE ET AL: "Using Linguistic Cues for the Automatic Recognition of Personality on Conversation and Text", JOURNAL OF ARTIFICIAL INTELLIGENCE RESEARCH, Bd. 30,
1. November 2007 (2007-11-01), Seiten 457-500 ist ein computergestütztes Verfahren zur automatischen Bestimmung der Persönlichkeit einer Testperson mittels Sprachdateien bekannt, umfassend die Schritte:
   - In einem ersten Schritt werden individuelle Textdateien von Testpersonen erfasst.
   - In einem zweiten Schritt werden Persönlichkeitsbewertungen der Testpersonen mit den Textdateien verbunden.
   - In einem dritten Schritt wird durch Auszählen die Häufigkeit von Worten in den einzelnen Textdateien in 88 Kategorien ermittelt.
   - In einem vierten Schritt werden mittels statistischer Methoden Zusammenhänge zwischen den ausgezählten Häufigkeiten und den 88 Kategorien (Linguistic Features) hergestellt.
   - In einem fünften Schritt wird das Modell anhand von weiteren Personen, deren Persönlichkeitsmerkmale nicht bekannt sind computergestützt und voll automatisch überprüft.

Aus JENNIFER GOLBECK ET AL: "Predicting personality with social media", PROCEEDINGS OF THE 2011 EXTENDED ABSTRACTS ON HUMAN FACTORS IN COMPUTING SYSTEMS, 1. Januar 2011 (2011-01-01), Seiten 253-262 und JENNIFER GOLBECK ET AL: "Predicting Personality from Twitter", PRIVACY, SECURITY, RISK AND Trust (PASSAT), 2011 IEEE THIRD INTERNATIONAL CONFERENCE ON AND 2011 IEEE THIRD INTERNATIONAL CONFERENCE ON SOCIAL COMPUTING (SOCIALCOM), IEEE, 9. Oktober 2011 (2011-10-09), Seiten 149-156 sind darüber hinaus Persönlichkeits-Klassifikationsalgorythmen bekannt, die auf der Word Count (LIWC) Methode beruhen.

Ausgehend von diesem Stand der Technik liegt der Erfindung die Aufgabe zugrunde, ein Verfahren zur automatisierten Analyse von weitgehend beliebigen Merkmalen einer Person zu schaffen, von der eine zu analysierende Sprachdatei stammt, wobei das Verfahren eine Ausgabe von Zwischenergebnissen noch während der Erfassung der Sprachdatei ermöglicht. Außerdem soll eine Sprachanalyseeinrichtung vorgeschlagen werden.

Diese Aufgabe wird durch ein Verfahren mit den Merkmalen des Anspruchs 1 und eine Sprachanalyseeinrichtung mit den Merkmalen des Anspruchs 8 gelöst.

Das Verfahren und die Sprachanalyseeinrichtung erlauben es Sprach- und Sprechnachrichten per Telefon, Handy, Mail, SMS, Chat oder Blog automatisiert zu erfassen, auszuwerten und daraus direkt individuell-persönlichkeitsbezogene Merkmale beispielsweise für ein Coaching oder eine Beratung abzuleiten.

Die Sprachanalyseeinrichtung ermöglicht es umfassend und verlässlich z.B. auf die Persönlichkeit und/oder den psychischen Zustand des Sprechers schließen zu können - und dadurch etwa Beratern, Coaches oder Personalverantwortlichen eine individuellere Kommunikation zu ermöglichen.

Zur Analyse von weitgehend beliebigen Merkmalen einer Person löst sich die Erfindung von dem bekannten Konzept der Auswertung statischer Schlüsselwortlisten in Bezug auf den Persönlichkeitstyp. Die Analyse von Merkmalen setzt einen Vergleich mit anderen Personen voraus. Hierzu umfasst das erfindungsgemäße Verfahren ein Vorbereiten des Rechnersystems gemäß den Merkmalen aa) bis ad):
Durch das Speichern von mehreren, beispielsweise mindestens 1000 Sprachdateien unterschiedlicher Personen auf einer Speichereinheit des Rechnersystems gemäß Merkmal aa) wird eine hinreichend breite Referenz-Stichprobe gebildet, die den für eine Merkmalserkennung erforderlichen Vergleich mit anderen Personen ermöglicht, wobei jede Sprachdatei eine Mindestanzahl von Worten, vorzugsweise mindestens 100 Worte umfasst.

Jede Sprachdatei und/oder jede Referenz-Sprachdatei kann unmittelbar als Textdatei oder als Audiodatei vorliegen, die im Wege einer Transkription in eine Textdatei umgewandelt wird. Die Eingabe der Textdatei erfolgt über eine Eingabeeinheit, beispielsweise eine Tastatur. Die Wandlung der Audiodatei erfolgt insbesondere mittels einer Software zur Spracherkennung. Aus der Audiodatei können in einer Ausgestaltung des erfindungsgemäßen Verfahrens zusätzlich prosodische Informationen der Sprachdatei extrahiert werden.

Die gemäß Merkmal ab) gespeicherte Wörterbuchdatei deckt mindestens 80%, vorzugsweise jedoch sogar mindestens 95% der in den Sprachdateien enthaltenen Worte ab. Durch verwenden von derart umfangreichen, zumindest den zentralen Wortschatz umfassenden Wörterbuchdateien anstelle von Schlüsselwortlisten wird gewährleistet, das bei der Analyse große Teile der Sprachdateien berücksichtigt werden können. Die Worte der Wörterbuchdatei werden in eine Vielzahl von unterschiedlichen Kategorien gespeichert, wobei sämtliche Wörter der Wörterbuchdatei in mindestens einer der Kategorien eingeordnet sind. Die einzelnen Kategorien enthalten beispielsweise unterschiedliche Wortarten, wie Adverbien, Pronomen, Präpositionen, Konjunktionen oder Indefinitpronomen oder Wörter eines bestimmten semantischen Umfelds, wie beispielsweise Negationen oder Wörter zu positiven oder negative Emotionen. Die Kategorien können auch Wortkombinationen enthalten, die häufig in einer bestimmten Reihenfolge vorkommen, so genannte n-Gramme. Insgesamt sind vorzugsweise mindestens 250 solcher Kategorien vorgesehen.

Durch den Einzelvergleich nach Merkmal ac) wird die prozentuale Häufigkeit der in jeder Kategorie der Wörterbuchdatei enthaltenen Worte in Bezug auf die Wortzahl jeder Referenz-Sprachdatei ermittelt. Die ermittelten Werte für die prozentuale Häufigkeit werden nach Merkmal ad) mit Hilfe statistischer und/oder algorithmischer Methoden mit den bekannten Merkmalen der Personen in Zusammenhang gebracht, von denen die Referenz-Sprachdateien stammen. Aus den Zusammenhängen lassen sich Regeln ableiten, die es in einem nächsten Schritt ermöglichen, zu Sprachdateien, die nicht Teil der zuvor erfassten Referenz-Sprachdateien sind und von Personen stammen, von denen keine Merkmale bekannt sind, Merkmale vorherzusagen, die die Personen voraussichtlich aufweisen, von denen die Sprachdateien stammen.
- Bei der Erstellung des Regelwerks entsteht ein mehrdimensionaler Raum mit so vielen Dimensionen, wie es Kategorien der Wörterbuchdatei und ggf. nach Anspruch 8, 9 oder 10 zu berücksichtigende Informationen gibt. Die Referenz-Sprachdateien der Referenzstichprobe sind abhängig von den prozentualen Häufigkeiten in den einzelnen Kategorien und ggf. der Ausprägung der weiteren Informationen in diesem Raum angeordnet.
- An Hand der bekannten Merkmale der Personen, von denen die Referenz-Sprachdateien stammen, bilden sich Gruppen in diesem mehrdimensionalen Raum. Die Referenz-Sprachdateien von Personen mit einem bekannten Merkmal, beispielsweise einer hohen Gewissenhaftigkeit, befinden sich in bestimmten Teilen des mehrdimensionalen Raums und die Referenz-Sprachdateien von Personen mit einer geringen Gewissenhaftigkeit in anderen Teilen des mehrdimensionalen Raums.
- Mit Hilfe der statistischen und/oder algorithmischen Methoden werden die verschiedenen Teile des Raums möglichst scharf voneinander getrennt. Durch die scharfe Trennung wird gewährleistet, dass die anschließend erfassten Sprachdateien, die nicht Teil der Referenz-Sprachdateien sind, mit Hilfe des Regelwerks möglichst genau einem Teil des mehrdimensionalen Raumes zugeordnet werden können.

Im Anschluss an das Vorbereiten des Rechnersystems gemäß den Merkmalen aa) - ad) werden zusätzlich zu den Referenz-Sprachdateien der Referenzstichprobe die Sprachdateien von Personen erfasst, die keine bekannten Merkmale aufweisen. Diese Sprachdateien werden gemäß Merkmal c) analysiert:
- Der Einzelvergleich (Merkmal ca)) der Sprachdatei mit der Wörterbuchdatei durch Ermitteln der prozentualen Häufigkeit der in jeder Kategorie der Wörterbuchdatei enthaltenen Worte in Bezug auf die Wortzahl der Sprachdatei ist Voraussetzung für die Weiterverarbeitung der Sprachdatei mit Hilfe des Regelwerks nach Merkmal cb) wie folgt:
   - Die Verarbeitung der nach Merkmal ca) ermittelten prozentualen Häufigkeiten in jeder Kategorie erfolgt mit statistischen und/oder algorithmischen Methoden. Die ermittelten prozentualen Häufigkeiten werden mit den nach Merkmal ac) ermittelten prozentualen Häufigkeiten auf Ähnlichkeiten untersucht. Die Sprachdatei wird entsprechend der festgestellten Ähnlichkeiten klassifiziert und der Ausprägung mindestens eines bekannten Merkmals zugeordnet, das die unterschiedlichen Personen aufweisen, von denen die Referenz-Sprachdateien stammen. Um die Genauigkeit der Analyse zu verbessern, kann die Untersuchung der Ähnlichkeiten auf solche Kategorien der Wörterbuchdatei beschränkt werden, die für ein bestimmtes Merkmal bedeutsam sind.

Die einer Sprachdatei zugeordneten Merkmale werden in Form einer Ausgabedatei ausgegeben. Die Ausgabedatei kann unmittelbar auf einem Bildschirm angezeigt und /oder über einen Lautsprecher wiedergegeben und/oder über einen Drucker ausgedruckt werden. Die Ausgabedatei kann jedoch auch weiteren Datenverarbeitungsprozessen zugeführt werden, beispielsweise einem Datenübertragungsprozess, mit dem die Ausgabedatei über ein Netzwerk an einen Empfängerrechner des Rechnersystems übertragen wird. Des weiteren kann die Ausgabedatei beispielsweise einem automatischen Beantwortungsprozess zugeführt werden, der abhängig von dem bzw. den der Sprachdatei zugeordneten Merkmale(n) automatisch eine Antwort generiert. Die Antworten können als Standardantworten in einer Datenbank hinterlegt sein, die Zuordnungen zwischen den Merkmalen und den Standardantworten enthält. Die automatisch generierte Antwort wird beispielsweise an die Person übermittelt, von der die analysierte Sprachdatei stammt. Die Antwort kann jedoch auch oder zusätzlich an Dritte, wie beispielsweise den Betreiber der wortwahlbasierten automatischen Sprachanalyse übermittelt werden. Die Antwort kann als Textnachricht und/oder als Audio-Datei übermittelt werden. Die Textnachricht und/oder die Audiodatei können mit einem eine Anzeigeinheit und einen elektroakustischen Wandler aufweisenden Rechner des Rechnersystems wiedergegeben werden, wie beispielsweise ein Mobiltelefon oder ein Personalcomputer.

Gemäß den kennzeichnenden Merkmalen der Erfindung wird während des Erfassens der weiteren Sprachdatei mindestens einmal eine Teildatei der Sprachdatei in der Speichereinheit des Rechnersystems zwischengespeichert und die Teildatei analysiert. Die Zwischenspeicherung und Analyse erlaubt die Anzeige von Zwischenergebnissen noch während der Erfassung der Sprachdatei. Hierdurch wird quasi eine "Online-Analyse" ermöglicht, die beispielsweise bei der Analyse von über das Telefon übermittelten Sprachdateien von besonderem Interesse sein kann. Es können beispielsweise in der Polizeiarbeit Merkmale eines Anrufers noch während des Telefonats ermittelt werden. Die Zwischenspeicherung einer Teildatei erfolgt automatisch entweder nach Erreichen einer bestimmten Anzahl von Worten einer Sprachdatei oder nach dem Verstreichen einer bestimmten Zeit der Erfassung der Sprachdatei.

Die Ausgabedatei und /oder die vorläufige Ausgabedatei enthält vorzugsweise Informationen zu Persönlichkeitsmerkmalen und/oder Merkmalen, die den psychischen Zustand der Person beschreiben, von der die Sprachdatei stammt. Hierzu wird die Untersuchung der Ähnlichkeiten der Sprachdatei auf solche Kategorien der Wörterbuchdatei beschränkt, die für die genannten Merkmale bedeutsam sind.

Durch die Merkmale des Anspruchs 2 wird ein Verfahren geschaffen, bei dem sich die Datenbasis der Referenz-Stichprobe vergrößert. Die Vergrößerung der Datenbasis verbessert die Aussagekraft der Analyse, da die statistischen und/oder algorithmischen Zusammenhänge des Regelwerks sich auf eine breitere Referenzstichprobe stützen. Um ein selbstlernendes Verfahren zu schaffen, ist eine Rückmeldung vorgesehen, die eine Bewertung der Richtigkeit der im Wege der Analyse der Sprachdatei nach Merkmal c) zugeordneten Merkmale erlaubt. Die Rückmeldung kann beispielsweise über eine Eingabe an einem Bildschirm eines Personalcomputers erfolgen, wobei über vordefinierte Auswahlfelder, wie z.B. "Trifft zu, trifft teilweise zu , trifft nicht zu" die Bewertung erfolgt. Die Rückmeldung kann beispielsweise durch die Person, von der die Sprachdatei stammt, eingegeben werden. Wenn die Referenz-Stichprobe nach Merkmal f) erweitert wird, muss das Regelwerk unter Berücksichtigung der vergrößerten Datenbasis entsprechend Merkmal ad) aktualisiert und erneut gespeichert werden. Die Aktualisierung und Speicherung kann in zeitlichen Abständen erfolgen, nachdem der Referenz-Stichprobe mehrere Sprachdateien hinzugefügt wurden.

In dem der Referenz-Stichprobe nur solche Sprachdateien hinzugefügt werden, die eine festgelegte Mindestanzahl von Worten aufweisen, wird gewährleistet, dass ausschließlich zur Verbesserung des Regelwerks geeignete Sprachdateien der Referenz-Stichprobe hinzugefügt werden. Die Mindestanzahl von Worten beträgt vorzugsweise 100 Worte.

Um beispielsweise eine Vorwahl der Sprache oder eine bessere Anpassung an die mit dem Verfahren zu erkennenden Merkmale der Person, von der die Sprachdatei stammt, zu ermöglichen, wird in einer Ausgestaltung der Erfindung vorgeschlagen, dass die Wörterbuchdatei abhängig vom Einsatzzweck des Verfahrens auf dem Rechnersystems gespeichert wird. Vorzugsweise sind nach Anspruch 7 auf dem Rechnersystem mehrere Wörterbuchdateien mit unterschiedlichem Inhalt gespeichert, die wahlweise abhängig vom Einsatzzweck des Verfahrens aktiviert werden können.

In der Ausgestaltung des erfindungsgemäßen Verfahren nach Anspruch 7 wird das Ergebnis der wortwahlbasierten automatisierten Sprachanalyse weiter verbessert. Zusätzlich wird mindestens eine weitere Information zu jeder Referenz-Sprachdatei und zu jeder zu analysierenden Sprachdatei erfasst. Bei den zusätzlichen Informationen handelt es sich insbesondere um prosodische Informationen, wie etwa die Dauer (z.B. Sprechgeschwindigkeit, Pausen), die Frequenz (z.B. durchschnittliche Tonhöhe, maximale Tonhöhe)und die Energie (z.B. Lautstärke in dB) oder syntaktische und/oder morphologische Informationen. Im Einzelnen erfordert die Berücksichtigung der zusätzlichen Informationen im Rahmen der wortwahlbasierten Sprachanalyse die folgenden Maßnahmen:
- Das Vorbereiten des Rechnersystems gemäß Merkmal a) wird um den Schritt erweitert, dass zusätzlich die mindestens eine weitere Information jeder Referenz-Sprachdatei erfasst wird. Diese Information, z.B. die Lautstärke, die Dauer oder Frequenz, liegt als Messwert für jede Referenz-Sprachdatei vor und kann daher unmittelbar vom Regelwerk verarbeitet werden. Auch eine syntaktische und/oder morphologische Information, z.B. die Häufigkeit der Verwendung von Substantiven, liegt als Zahlenwert für jede Referenz-Sprachdatei vor und kann daher unmittelbar vom Regelwerk verarbeitet werden.
- Das Regelwerk ist für die unmittelbare Verarbeitung der zusätzlichen Informationen derart eingerichtet ist, dass es mit statistischen und/oder algorithmischen Methoden außerdem Zusammenhänge zwischen den als Mess- oder Zahlenwerten erfassten weiteren Informationen und den bekannten Merkmalen der Personen ermittelt, von denen die Referenz-Sprachdateien stammen.
- Das anschließende Erfassen und Speichern einer zu analysierenden Sprachdatei gemäß Merkmal b) setzt zusätzlich das Erfassen der mindestens einen weiteren Information zu jeder Sprachdatei voraus.
- Die Analyse der Sprachdatei gemäß Merkmal c) umfasst zusätzlich zu dem Verarbeiten der nach Merkmal ca) ermittelten prozentualen Häufigkeiten mit Hilfe des Regelwerks eine Verarbeitung der mindestens einen weiteren Information jeder erfassten Sprachdatei, wobei das Regelwerk mit den statistischen und/oder algorithmischen Methoden die mindestens eine weitere Information jeder Sprachdatei auf Ähnlichkeiten mit dieser mindestens einen weiteren Information in den Referenz-Sprachdateien untersucht.
   Das Regelwerk klassifiziert die Sprachdatei unter Einbeziehung sämtlicher festgestellter Ähnlichkeiten mit den Referenz-Sprachdateien in dem durch die Kategorien und jede zusätzlichen Information definierten, mehrdimensionalen Raum und ordnet sie der Ausprägung mindestens eines bekannten Merkmals zu, das die unterschiedlichen Personen aufweisen, von denen die Referenz-Sprachdateien stammen.

Wie bereits eingangs erläutert, kann die Ausgabedatei einem automatischen Beantwortungsprozess zugeführt werden, der abhängig von dem bzw. den der Sprachdatei zugeordneten Merkmale(n) automatisch eine Antwort generiert. Diese Antwortdatei wird als Audiodatei erstellt. Die Wiedergabe der Audiodatei erfolgt mittels eines mit dem Rechnersystem verbundenen elektroakustischen Wandlers. Indem die Wiedergabe der Audiodatei mit dem elektroakustischen Wandler abhängig von den in der Ausgabedatei enthaltenen Merkmalen gesteuert wird, lässt sich die Wiedergabe der Antwort beispielsweise an die Persönlichkeit und/oder den psychischen Zustand der Person anpassen, von der die analysierte und zu beantwortende Sprachdatei stammt. Die Wiedergabe der Audiodatei wird abhängig von den in der Ausgabedatei enthaltenen Merkmalen vorzugsweise dadurch gesteuert, dass die Dauer und/oder die Frequenz und/oder die Energie der Wiedergabe verändert wird.

Die technische Anpassung der Wiedergabe der Audiodatei kann beispielsweise bei einem automatischen Anrufbeantwortungssystem zum Einsatz kommen. Sofern die wortwahlbasierte Sprachanalyse einen ängstlichen oder neurotischen Anrufer erkennt, wird die StimmWiedergabe verlangsamt und die Frequenz gesenkt.

Die Sprachanalyseeinrichtung zur wortwahlbasierten automatisierten Sprachanalyse umfasst
- ein Rechnersystem mit mindestens einer Speichereinheit,
- eine mit dem Rechnersystem verbundene Eingabeeinheit,
- eine mit dem Rechnersystem verbundene Ausgabeeinheit und
- ein Programm, das zur Ausführung eines Verfahrens nach einem der Ansprüche 1 bis 12 eingerichtet ist.

Im Sinne der Erfindung kann das Rechnersystem lediglich einen Rechner oder mehrere Rechner umfassen, die miteinander verbunden sind. Ein Rechner des Rechnersystems ist ein Gerät, das mittels eines Datenverarbeitungsprogramms Daten verarbeitet. Das Rechnersystem kann daher sowohl handelsübliche Personalcomputer, jedoch auch Smartphones und andere programmierbare elektronische Geräte umfassen.
Die Verbindung zwischen mehreren Rechnern kann über ein Netzwerk oder mehrere Netzwerke, insbesondere auch das Internet, hergestellt werden. Das Rechnersystem kann eine oder mehrere Speichereinheiten aufweisen, auf denen die verschieden Dateien, wie die Wörterbuch- und Sprachdateien sowie die Programm-Dateien, gespeichert werden. Die Dateien können verteilt auf mehreren Speichereinheiten oder sämtlich auf einer einzigen Speichereinheit gespeichert werden.

Wenn das Rechnersystem mehrere Speichereinheiten aufweist, können die Sprachdateien und die Wörterbuchdateien auf unterschiedlichen Speichereinheiten gespeichert werden, um einen schnellen Zugriff auf die unterschiedlichen Dateien für den durch das Programm auszuführenden Einzelvergleich zu ermöglichen.

Sofern die Erfassung der Referenz-Sprachdateien bzw. der Sprachdateien nicht textbasiert, beispielsweise mittels einer Tastatur erfolgt, sondern die gesprochene Sprache als Audiodatei erfasst werden soll, weist die Eingabeeinheit ein an sich bekanntes Spracherkennungssystem zur Transkription der Audiodatei in eine Textdatei auf. Das Rechnersystem kann darüber hinaus zur Extraktion prosodischer Informationen aus jeder Audiodatei eingerichtet sein.

Als Ausgabeeinheit kommen ein Bildschirm und /oder über ein Lautsprecher und/oder ein Drucker in Betracht. Anstatt die Ausgabedatei über die Ausgabeeinheit unmittelbar auszugeben, kann die Ausgabedatei über eine Schnittstelle einem weiteren Datenverarbeitungsprozess zugeführt und das Ergebnis des werden Datenverarbeitungsprozesses wird mit der Ausgabeeinheit, beispielsweise einem Lautsprecher ausgegeben.

Beispielsweise kann abhängig von den in der Ausgabedatei enthaltenen Merkmalen (z. B. ein Persönlichkeitsmerkmal der Person) automatisch eine technische Einrichtung, beispielsweise eine Telefonzentrale gesteuert werden, um die Person, von der die analysierte Sprachdatei stammt, automatisch mit einem zu deren Persönlichkeit passenden Ansprechpartner zu verbinden.

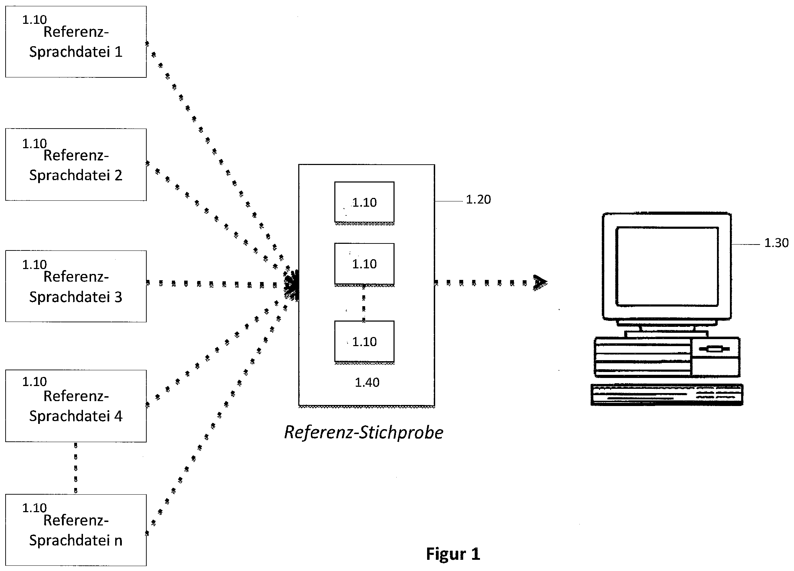

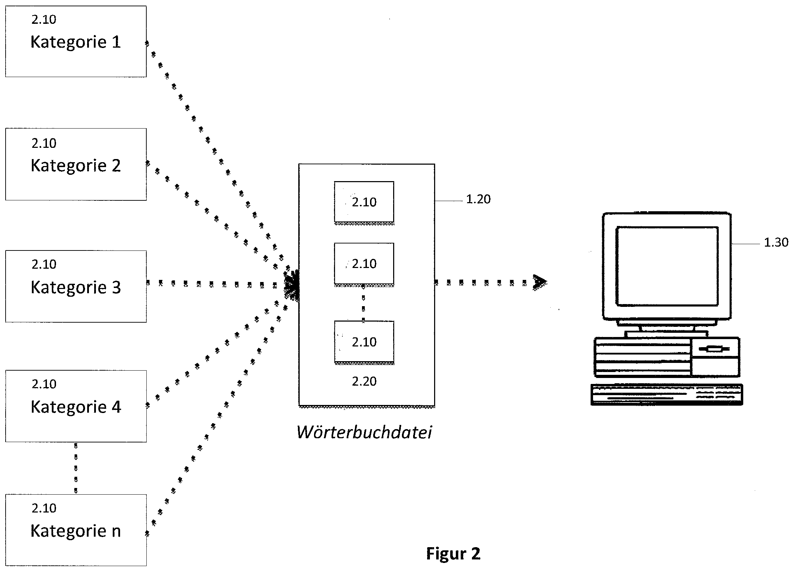

Nachfolgend werden die Schritte des erfindungsgemäßen Verfahrens zur wortwahlbasierten automatisierten Sprachanalyse anhand der Figuren 1 - 9 näher erläutert:
Figuren 1 - 5 veranschaulichen das Vorbereiten des Rechnersystems der Sprachanalyseeinrichtung:
   Zunächst werden, wie aus Figur 1 erkennbar, mehrere (z.B. 1000) Referenz-Sprachdateien 1 - n (1.10) auf einer Speichereinheit (1.20) des Rechnersystems (1.30) gespeichert. Diese Referenz-Sprachdateien (1.10) bilden eine Referenz-Stichprobe (1.40). Eine Referenz-Sprachdatei (1.10) kann dabei entweder unmittelbar als Textdatei vorliegen oder als gesprochene Audiodatei, die im Zuge einer Transkription mit Hilfe eines Spracherkennungssystems in eine Textdatei umgewandelt wird. Jede Referenz-Sprachdatei (1.10) umfasst eine Mindestanzahl von beispielsweise mindestens 100 Worten. Alle zu speichernden Referenz-Sprachdateien (1.10) in der Referenz-Stichprobe (1.40) stammen von unterschiedlichen Personen.
Aus Figur 2 ist das Speichern einer Wörterbuchdatei (2.20) mit einer Vielzahl von unterschiedlichen Kategorien 1 - n (2.10) auf der Speichereinheit (1.20) des Rechnersystems (1.30) erkennbar. Bei den vorzugsweise über 250 unterschiedlichen Kategorien (2.10) handelt es sich beispielsweise um die Kategorien: Adverbien, Pronomen, Negationen, Artikel oder Wörter eines bestimmten semantischen Umfelds, oder um häufig zusammen vorkommende Worte, n-Gramme etc.. Sämtliche Wörter der Wörterbuchdatei (2.20) sind in mindestens einer der Kategorien (2.10) eingeordnet.

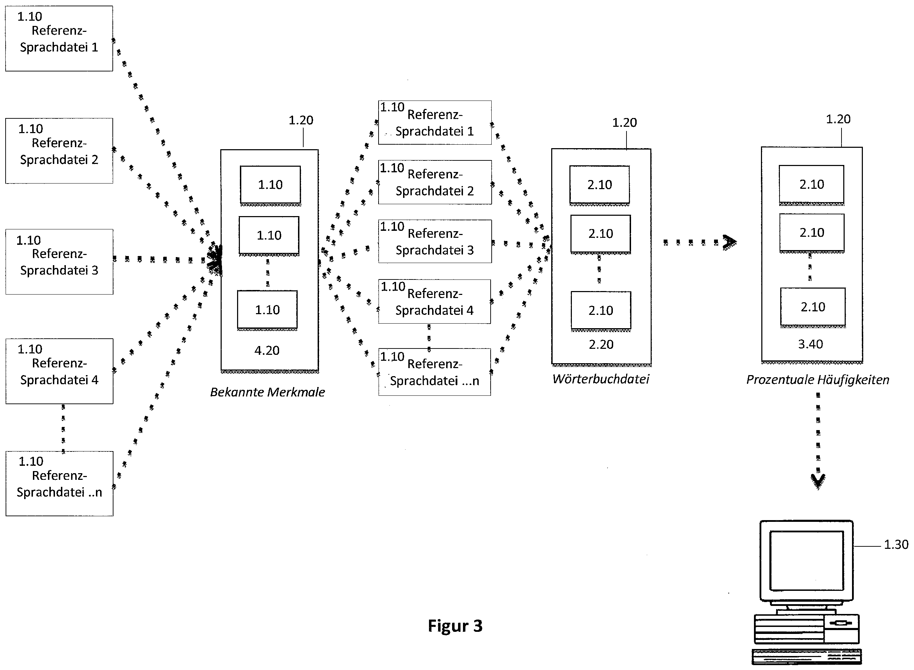

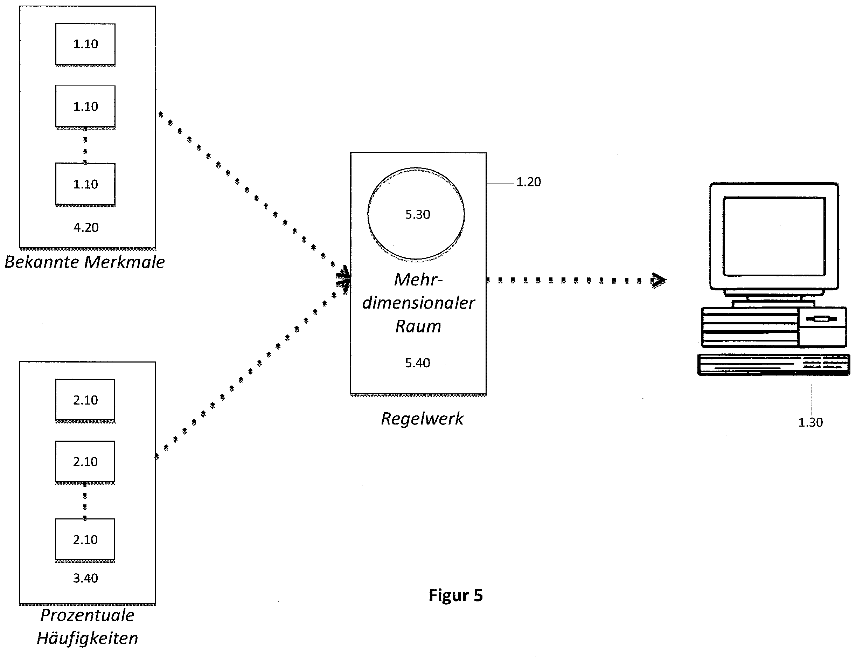

Figur 3 veranschaulicht die Schritte zur Vorbereitung eines Regelwerks (5.40) (vgl. Figur 5), das zur Vorbereitung des Rechnersystems (1.30) in der Speichereinheit (1.20) gespeichert wird. Es werden die Referenz-Sprachdateien (1.10), die jeweils von unterschiedlichen Testpersonen stammen, erfasst und auf der Speichereinheit (1.20) gespeichert. Diese weisen bekannte Merkmale (4.20) auf, wie z.B. bekannte Persönlichkeitsmerkmale, Motive, Antriebe oder einen bekannten psychischen Zustand. Die Referenz-Sprachdateien (1.10), mit bekannten Merkmalen (4.20), werden mit Hilfe der Wörterbuchdatei (2.20) analysiert. Dabei werden Einzelvergleiche jeder Referenz-Sprachdatei (1.10) der Referenz-Stichprobe (1.40) mit der in der Speichereinheit (1.20) abgelegten Wörterbuchdatei (2.20) durchgeführt. Es werden prozentuale Häufigkeiten (3.40) der in jeder Kategorie (2.10) der Wörterbuchdatei (2.20) enthaltenen Worte jeder Referenz-Sprachdatei (1.10) in Bezug auf die Gesamtwortzahl dieser Referenzsprachdatei ermittelt. Diese prozentualen Häufigkeiten (3.40) werden auf der Speichereinheit (1.20) des Rechnersystems (1.30) zur Weiterverarbeitung gespeichert.

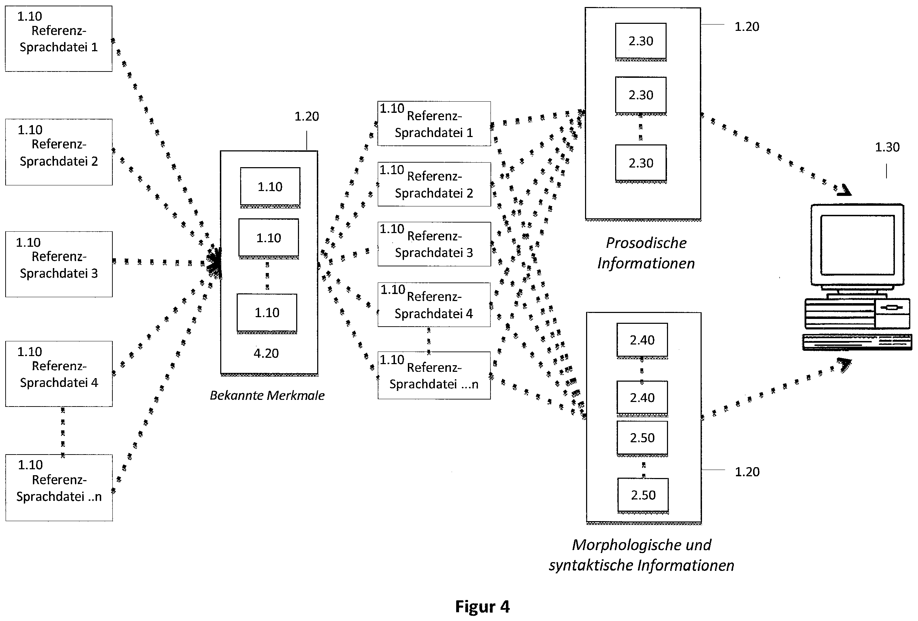

In Figur 4 ist die optionale Extraktion von weiteren Informationen aus den Referenz-Sprachdateien (1.10) mit bekannten Merkmalen (4.20) nach den Ansprüchen 8 bis 10 dargestellt. Wird die Referenz-Sprachdatei (1.10) aus einer Audiodatei transkribiert, können als weitere Information prosodische Informationen (2.30) gewonnen und auf der Speichereinheit (1.20) des Rechnersystems (1.30) für die Weiterverarbeitung gespeichert werden. Dies geschieht durch Analyse der zu transkribierenden Audiodatei mit aus dem Stand der Technik bekannten Programmen für die Extraktion prosodischer Sprachmerkmale aus Audiodateien, wie etwa mit dem quelloffenen Programm "Praat" für phonetische Analysen auf Signalbasis, das von Paul Boersma und David Weenink am Institute of Phonetic Sciences an der Universität Amsterdam entwickelt wurde und sich im Bereich der Sprach- und Kommunikationswissenschaften als Quasistandard etabliert hat.

In dem Ausführungsbeispiel wird als prosodische Information, (2.30) die Energie (z.B. Lautstärke in Dezibel) der Audiodatei erfasst.

Außerdem werden in dem Ausführungsbeispiel zusätzlich aus jeder aus der Audiodatei transkribierten Sprachdatei, morphologische (2.40) und syntaktische Informationen (2.50) extrahiert. Die morphologischen Informationen (2.40) beziehen sich auf die verschiedenen Möglichkeiten, Worte zu bilden - es handelt sich um eine Form von "Wortgrammatik". Es geht hierbei um die Konjugation, Deklination, Kombination, Ableitung und Kürzung von Worten, die sich in einer Referenz-Sprachdatei (1.10) finden. Die Anzahl der Worte mit einer bestimmten "Wortgrammatik" werden gezählt. Die Syntax beschreibt die "Satzgrammatik", bei der die Art des Satzbaus untersucht wird. Dies geschieht mit speziell trainierten Part-of-Speech-Taggern. Auch diese Informationen liegen als Zahlenwert vor. Die Informationen werden - analog zu den prozentualen Häufigkeiten (3.40) in den Kategorien (2.10)-auf einer Speichereinheit (1.20) des Rechnersystems (1.30) zur Weiterberechnung gespeichert.

Die prozentualen Häufigkeiten (3.40) jeder Referenz-Sprachdatei (1.10) in den einzelnen Kategorien (2.10) der Wörterbuchdatei (2.20) und die Zahlenwerte zu den ggf. zusätzlich extrahierten Informationen werden in dem Regelwerk (5.40) verarbeitet. Die Darstellung in Figur 5 zeigt der Übersichtlichkeit halber lediglich, wie die prozentualen Häufigkeiten (3.40) jeder Referenz-Sprachdatei (1.10) mit den bekannten Merkmalen (4.20) derselben Referenz-Sprachdateien (1.10) im Regelwerk (5.40) zusammengeführt und verglichen werden.

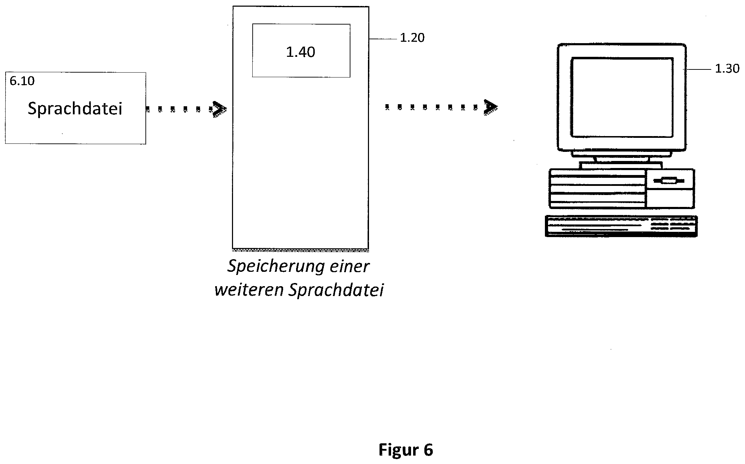

Im Regelwerk (5.40) wird jede Kategorie (2.10) zu einer Dimension eines mehrdimensionalen Raums (5.30). Je nach prozentualer Häufigkeit (3.40) der in jeder Kategorie (2.10) enthaltenen Worte sind die Referenz-Sprachdateien (1.10) aller Personen mit bekannten Merkmalen (4.20) in dem mehrdimensionalen Raum (5.30) angeordnet. Die Anordnung erfolgt mit statistischen und/oder algorithmischen Methoden, die Zusammenhänge zumindest zwischen den prozentualen Häufigkeiten (3.40) und den bekannten Merkmalen der Personen ermitteln, von denen die Referenz-Sprachdateien (1.10) stammen. Als trennscharfe algorithmische Methode kommt beispielsweise ein als "Support Vector Machine" bekanntes Verfahren zum Einsatz. Dieses Verfahren hat - in einer Ausführung - zum Ziel, eine Hyperebene (mehrdimensionale Gerade) so in den mehrdimensionalen Raum zu legen, dass räumlich möglichst gut in den z.B. 100 Dimensionen zwischen Personen mit einer hohen, einer mittleren und einer geringen Ausprägung eines bestimmten bekannten Merkmals getrennt wird. Als statistische Methode eignen sich insbesondere multidimensionale Regressionen. Unabhängig von der verwendeten statistischen oder algorithmischen Methode werden Regeln erkannt, wie die Referenz-Sprachdateien und die bekannten Merkmale der Personen von denen die Referenz-Sprachdateien stammen, zusammenhängen. Dies ermöglicht dann in einem nachfolgenden Analyseschritt einer Sprachdatei (6.10) von einer Person mit unbekannten Merkmalen eine Vorhersage der Merkmale der Person, von der die weitere Sprachdatei (6.10) (vgl. Figur 6) stammt. Das Regelwerk (5.40) wird in der Speichereinheit (1.20) des Rechnersystems (1.30) gespeichert (vg. Figur 5).

An das Vorbereiten des Rechnersystems schließt sich das in Figur 6 dargestellte Erfassen und Speichern der Sprachdatei (6.10), deren Merkmale nicht bekannt sind, zusätzlich zu den Sprachdateien (1.10) der Referenzstichprobe (1.40), in der Speichereinheit (1.20) des Rechnersystems (1.30) an. Die Sprachdatei (6.10) kann dabei entweder unmittelbar als Textdatei vorliegen oder als gesprochene Audiodatei, die mit Hilfe eines Spracherkennungssystems in eine Textdatei umgewandelt wird. Jede Sprachdatei (6.10) umfasst vorzugsweise eine Mindestanzahl von Worten, insbesondere mindestens 100 Worte.

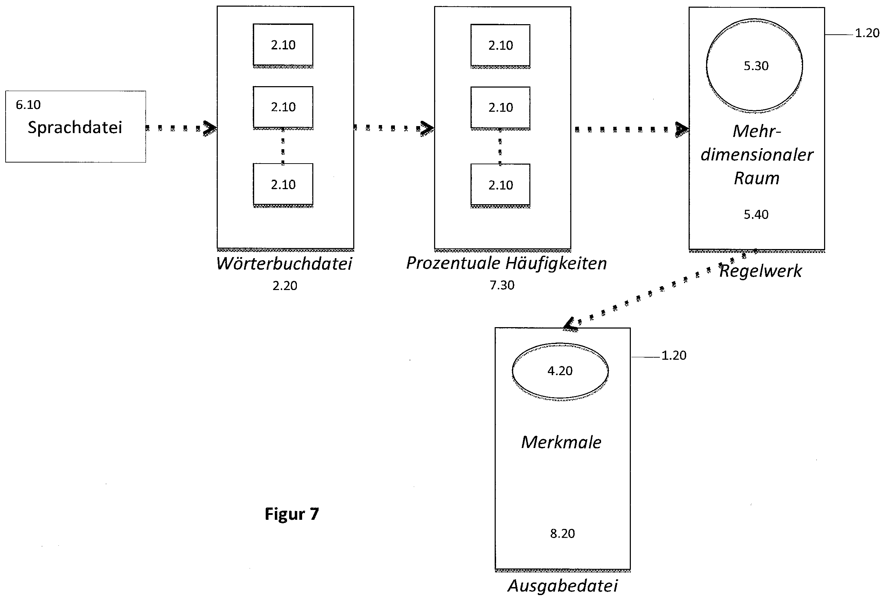

Figur 7 veranschaulicht den ersten Schritt der Analyse der Sprachdatei (6.10) mit Hilfe der in der Speichereinheit (1.20) gespeicherten Wörterbuchdatei (2.20). Es werden Einzelvergleiche der Sprachdatei (6.10) mit der Wörterbuchdatei (2.20) durchgeführt, zur Ermittlung der prozentualen Häufigkeiten (7.30), der in jeder Kategorie (2.10) der Wörterbuchdatei (2.20) enthaltenen Worte in der Sprachdatei (6.10). Die in dem ersten Analyseschritt ermittelten prozentualen Häufigkeiten (7.30) der Sprachdatei (6.10) werden in einem zweiten Analyseschritt mit Hilfe des Regelwerks (5.40) dadurch verarbeitet, dass die mit statistischen und/oder algorithmischen Methoden im ersten Analyseschritt ermittelten prozentualen Häufigkeiten (7.30) mit den bei der Vorbereitung des Rechnersystems ermittelten prozentualen Häufigkeiten (3.40) auf Ähnlichkeiten untersucht werden, dass die Sprachdatei (6.10) entsprechend der festgestellten Ähnlichkeiten klassifiziert, d.h. im mehrdimensionalen Raum (5.30) eingeordnet und mindestens einem bekannten Merkmal zugeordnet wird, das die unterschiedlichen Personen aufweisen, von denen die Referenz-Sprachdateien (1.10) stammen. Hinsichtlich der in Betracht kommenden statistischen und/oder algorithmischen Methoden wird auf die Ausführungen zu Figur 5 verwiesen.

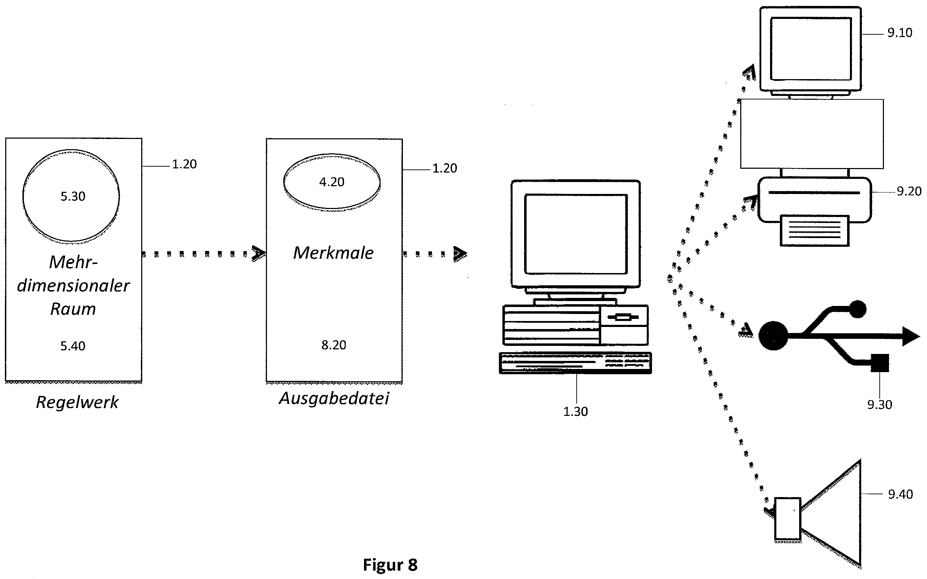

Die Ergebnisse dieser Analyse (zugeordnete Merkmale (4.20)) werden in einer Ausgabedatei (8.20) in einer Speichereinheit (1.20) des Rechnersystems (1.30) gespeichert (vgl. Figur 8). Die Zuordnung kann beispielsweise als Ausprägung in % des Merkmals (4.20) angegeben werden.

Figur 8 veranschaulicht die Weiterverarbeitung der mit Hilfe des Regelwerks (5.40) zugeordneten Merkmale (4.20) einer Sprachdatei (6.10). Die die zugeordneten Merkmale (4.20) enthaltende Ausgabedatei (8.20) wird über eine Ausgabeeinheit (9.10, 9.20, 9.30, 9.40) des Rechnersystems ausgegeben. Die Ausgabeeinheit kann eine Anzeigeeinheit (9.10) und/oder einen Drucker (9.20) und/oder eine Schnittstelle (9.30) und/oder einen elektroakustischen Wandler(9.40) umfassen.

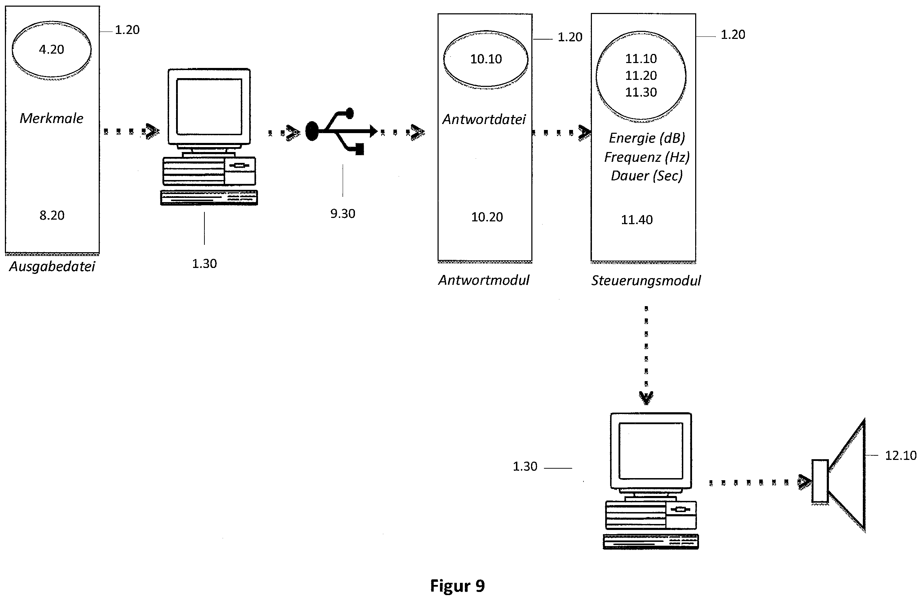

Figur 9 veranschaulicht eine Ausgestaltung der erfindungsgemäßen wortwahlbasierten Sprachanalyse, bei der zu der ausgegebenen Ausgabedatei (8.20) automatisch von einem Antwortmodul (10.20) eine Antwortdatei (10.10) als Audiodatei erstellt wird. Die Antworten können als Standardantworten in einer Datenbank hinterlegt sein, die Zuordnungen zwischen den Merkmalen (4.20) und den Standardantworten enthält. Die Audiodatei wird mittels eines elektroakustischen Wandlers (12.10) wiedergegeben. Ein Steuerungsmodul (11.40) steuert die Wiedergabe der als Audiodatei vorliegenden Antwortdatei (10.10) mit dem elektroakustischen Wandler (12.10) abhängig von den in der Ausgabedatei (8.20) enthaltenen Merkmalen. Das Steuerungsmodul (11.40) steuert die Energie (11.10), die Frequenz (11.20) und die Dauer (11.30) der Wiedergabe. Der elektroakustische Wandler (12.10) setzt die durch das Steuerungsmodul (11.40) generierten elektrischen Signale in akustische Signale um. Beispielsweise wird die Dauer der Wiedergabe der Antwortdatei verlangsamt (geringere Sprechgeschwindigkeit) und die Frequenz der Wiedergabe gegenüber den vorgegebenen Ausgangswerten für die Wiedergabe der Audiodatei gesenkt, wenn das zugeordnete Merkmal (4.20) auf eine besonders nervöse Person schließen lässt, von der die Sprachdatei (6.10) stammt, auf die das Antwortmodul (10.10) automatisch antwortet.

Abweichend zu der Darstellung in Figur 8 wird die Ausgabedatei (8.20) nicht unmittelbar ausgegeben, sondern über eine Schnittstelle (9.30) den weiteren Datenverarbeitungsprozessen durch das Antwortmodul (10.20) und das Steuerungsmodul (11.40) zugeführt. Das Antwortmodul (10.20) und/oder das Steuerungsmodul (11.40) können entweder auf demselben Rechner des Rechnersystems (1.30) wie die Ausgabedatei (8.20) gespeichert sein, oder auf einem über ein Netzwerk gekoppelten Rechner des Rechnersystems (1.30), der sich beispielsweise bei einem Kunden befindet.

**Bezugszeichenliste**

| **Nr.** | **Bezeichnung** |
|---|---|
| 1.10 | Referenz-Sprachdateien |
| 1.20 | Speichereinheit |
| 1.30 | Rechnersystem |
| 1.40 | Referenz-Stichprobe |
| | |
| 2.10 | Kategorien |
| 2.20 | Wörterbuchdatei |
| 2.30 | prosodische Informationen |
| 2.40 | morphologische Informationen |
| 2.50 | syntaktische Informationen |
| | |
| 3.40 | prozentuale Häufigkeit (Vorbereiten Rechnersystem) |
| | |
| 4.20 | bekannte Merkmale |
| | |
| 5.30 | mehrdimensionaler Raum (Vektorraum) |
| 5.40 | Regelwerk |
| 6.10 | Sprachdatei |
| | |
| 7.30 | prozentuale Häufigkeit (Analyse) |
| | |
| 8.20 | Ausgabedatei |
| | |
| 9.10 | Anzeigeeinheit |
| 9.20 | Drucker |
| 9.30 | Schnittstelle |
| 9.40 | elektroakustischer Wandler |
| 10.10 | Antwortdatei |
| 10.20 | Antwortmodul |
| | |
| 11.10 | Energie |
| 11.20 | Frequenz |
| 11.30 | Dauer |
| 11.40 | Steuerungsmodul |
| | |
| 12.10 | elektroakustischer Wandler |

## Patentansprüche

1. Verfahren zur wortwahlbasierten automatisierten Sprachanalyse umfassend die Schritte:
a) Vorbereiten eines Rechnersystems (1.30) durch
aa) Speichern von mehreren Referenz-Sprachdateien (1.10) auf einer Speichereinheit (1.20) des Rechnersystems (1.30) zur Bildung einer Referenz-Stichprobe (1.40), wobei jede Referenz-Sprachdatei (1.10) eine Mindestanzahl von 100 Worten umfasst und sämtliche Referenz-Sprachdateien (1.10) von unterschiedlichen Personen stammen, die bekannte Merkmale aufweisen,
ab) Speichern einer Wörterbuchdatei (2.20) mit mindestens 250 unterschiedlichen Kategorien (2.10) auf einer Speichereinheit (1.20) des Rechnersystems (1.30), wobei die gespeicherte, den zentralen Wortschatz umfassende Wörterbuchdatei mindestens 95% der in den Sprachdateien enthaltenen Worte abdeckt und sämtliche Wörter der Wörterbuchdatei (2.20) in mindestens einer der mindestens 250 Kategorien (2.10) eingeordnet sind,
ac) Durchführen eines Einzelvergleichs jeder Referenz-Sprachdatei (1.10) der Referenz-Stichprobe (1.40) mit der Wörterbuchdatei (2.20) durch Ermitteln der prozentualen Häufigkeit (3.40) der in jeder Kategorie (2.10) der Wörterbuchdatei (2.20) enthaltenen Worte in jeder Referenz-Sprachdatei (1.10),
ad) Speichern eines Regelwerks (5.40) in einer Speichereinheit (1.20) des Rechnersystems (1.30), das mit statistischen und/oder algorithmischen Methoden Zusammenhänge zumindest zwischen den nach Merkmal ac) ermittelten prozentualen Häufigkeiten (3.40) in einer oder mehreren Kategorien (2.10) und mindestens einem bekannten Merkmal (4.20) der Personen ermittelt, von denen die Referenz-Sprachdateien (1.10) stammen,
b) an das Vorbereiten des Rechnersystems gemäß den Merkmalen aa) - ad) anschließendes Erfassen und Speichern einer Sprachdatei (6.10), zusätzlich zu den Referenz-Sprachdateien (1.10) der Referenzstichprobe (1.40), in einer Speichereinheit (1.20) des Rechnersystems (1.30), wobei jede Sprachdatei (6.10) und jede Referenz-Sprachdatei unmittelbar als Textdatei oder als Audiodatei vorliegt, die im Wege einer Transkription in eine Textdatei umgewandelt wird,
c) Analysieren der gemäß Merkmal b) zusätzlich erfassten und gespeicherten Sprachdatei (6.10) durch
ca) Durchführen eines Einzelvergleichs der Sprachdatei (6.10) mit der Wörterbuchdatei (2.20) durch Ermitteln der prozentualen Häufigkeit (7.30) der in jeder Kategorie (2.10) der Wörterbuchdatei (2.20) enthaltenen Worte in der Sprachdatei (6.10) ,
cb) Verarbeiten der nach Merkmal ca) ermittelten prozentualen Häufigkeiten (7.30) mit Hilfe des Regelwerks(5.40), das mit statistischen und/oder algorithmischen Methoden die nach Merkmal ca) ermittelten prozentualen Häufigkeiten (7.30) mit den nach Merkmal ac) ermittelten prozentualen Häufigkeiten (3.40) auf Ähnlichkeiten untersucht und das die Sprachdatei (6.10) entsprechend der festgestellten Ähnlichkeiten klassifiziert und mindestens einem bekannten Merkmal zuordnet, das die Personen aufweisen, von denen die Referenz-Sprachdateien (1.10) stammen,
d) Erstellen einer Ausgabedatei (8.20), die der Sprachdatei (6.10) nach Merkmal cb) zugeordnete Merkmale (4.20) enthält,
e) Ausgeben der Ausgabedatei (8.20),
**wobei**
ga) während des Erfassens der weiteren Sprachdatei (6.10) gemäß Merkmal b) mindestens einmal eine Teildatei der Sprachdatei (6.10) in der Speichereinheit (1.20) des Rechnersystems (1.30) zwischengespeichert wird, wobei jede weitere Sprachdatei (6.10) mindestens 100 Worte umfasst,
gb) die zwischengespeicherte Teildatei analysiert wird durch
gba) Durchführen eines Einzelvergleichs der Teildatei mit der Wörterbuchdatei (2.20) durch Ermitteln der prozentualen Häufigkeit (7.30) der in jeder Kategorie (2.10) der Wörterbuchdatei (2.20) enthaltenen Worte in der Teildatei,
gbb) Verarbeiten der nach Merkmal gba) ermittelten prozentualen Häufigkeiten (7.30) mit Hilfe des Regelwerks (5.40), das mit statistischen und/oder algorithmischen Methoden die nach Merkmal gba) ermittelten prozentualen Häufigkeiten (7.30) mit den nach Merkmal ac) ermittelten prozentualen Häufigkeiten (3.40) auf Ähnlichkeiten untersucht, die Teildatei entsprechend der festgestellten Ähnlichkeiten klassifiziert und mindestens einem bekannten Merkmal zuordnet, das die unterschiedlichen Personen aufweisen, von denen die Referenz-Sprachdateien (1.10) stammen,
gc) Erstellen einer vorläufigen Ausgabedatei, die der Teildatei nach Merkmal gbb) zugeordente Merkmale (4.20) enthält,
gd) Ausgeben der vorläufigen Ausgabedatei.

2. Verfahren nach Anspruch 1, **gekennzeichnet durch** die weiteren Schritte:
fa) Erweitern der Referenz-Stichprobe (1.40) nach Merkmal aa) durch Hinzufügen gemäß Merkmal b) erfasster weiterer Sprachdateien (6.10) als Referenz-Sprachdateien (1.10),
fb) Vorsehen einer Rückmeldung durch eine Eingabe, die eine Bewertung der Richtigkeit der im Wege der Analyse der Sprachdatei nach Merkmal c) zugeordneten Merkmale erlaubt und
fc) Aktualisieren und erneutes Speichern des Regelwerks (5.40) unter Berücksichtigung der vergrößerten Datenbasis entsprechend Merkmal ad).

3. Verfahren nach Anspruch 2, **dadurch gekennzeichnet, dass** der Referenz-Stichprobe (1.40) nur solche weiteren Sprachdateien (6.10) hinzugefügt werden, die eine festgelegte Mindestanzahl von mindestens 100 Worten aufweisen.

4. Verfahren nach einem der Ansprüche 1 bis 3, **dadurch gekennzeichnet, dass** die Ausgabedatei und/oder die vorläufige Ausgabedatei Persönlichkeitsmerkmale und/oder Merkmale zum psychischen Zustand der Person enthält.

5. Verfahren nach einem der Ansprüche 1 bis 4, **dadurch gekennzeichnet, dass** unterschiedliche Wörterbuchdateien (2.20) abhängig vom Einsatzzweck des Verfahrens auf dem Rechnersystems (1.30) gespeichert werden.

6. Verfahren nach einem der Ansprüche 1 bis 4, **dadurch gekennzeichnet, dass** auf dem Rechnersystem (1.30) mehrere Wörterbuchdateien (2.20) mit unterschiedlichem Inhalt gespeichert sind, die wahlweise verwendbar sind.

7. Verfahren nach einem der Ansprüche 1 bis 6, **dadurch gekennzeichnet, dass**
- das Vorbereiten des Rechnersystems (1.30) gemäß Merkmal a) zusätzlich das Erfassen und Speichern mindestens einer weiteren Information (2.30) jeder Referenz-Sprachdatei (1.10) umfasst und das Regelwerk (5.40) derart eingerichtet ist, dass es mit statistischen und/oder algorithmischen Methoden außerdem Zusammenhänge zwischen der mindestens einen weiteren Information (2.30) und den bekannten Merkmalen (4.20) der Personen ermittelt, von denen die Referenz-Sprachdateien (1.10) stammen,
- das anschließende Erfassen und Speichern einer Sprachdatei (6.10) gemäß Merkmal b) zusätzlich das Erfassen und Speichern der mindestens einen weiteren Information (2.30) zu jeder Sprachdatei (6.10) umfasst, und
- das Analysieren der Sprachdatei (6.10) gemäß Merkmal c) zusätzlich zu dem Verarbeiten der nach Merkmal ca) ermittelten prozentualen Häufigkeiten mit Hilfe des Regelwerks (5.40) eine Verarbeitung der mindestens einen weiteren Information jeder erfassten Sprachdatei (6.10) umfasst, wobei das Regelwerk (5.40) mit den statistischen und/oder algorithmischen Methoden die mindestens eine weitere Information (2.30) jeder Sprachdatei auf Ähnlichkeiten mit dieser mindestens einen weiteren Information (2.30) in den Referenz-Sprachdateien untersucht und wobei das Regelwerk (5.40) die Sprachdatei (6.10) unter Einbeziehung sämtlicher festgestellter Ähnlichkeiten klassifiziert und der Ausprägung mindestens eines bekannten Merkmals (4.20) zuordnet, das die unterschiedlichen Personen aufweisen, von denen die Referenz-Sprachdateien (1.10) stammen,
- wobei die Referenz-Sprachdatei und die Sprachdatei (1.10, 6.10) jeweils aus einer Audiodatei transkribiert und als weitere Informationen prosodische Informationen aus den Audiodateien extrahiert werden und /oder als weitere Informationen morphologische und/oder syntaktische Informationen (2.40, 2.50) aus jeder Referenz-Sprachdatei und jeder Sprachdatei (1.10, 6.10) extrahiert werden.

8. Sprachanalyseeinrichtung zur wortwahlbasierten automatisierten Sprachanalyse umfassend
- ein Rechnersystem (1.30) mit mindestens einer Speichereinheit (1.20),
- eine mit dem Rechnersystem (1.30) verbundene Eingabeeinheit,
- ein auf mindestens einer Speichereinheit (1.20) gespeichertes Programm, das zur Ausführung eines Verfahrens nach einem der Ansprüche 1 bis 7 auf dem Rechnersystem (1.30) eingerichtet ist.

9. Sprachanalyseeinrichtung nach Anspruch 8, **dadurch gekennzeichnet, dass** das Rechnersystem (1.30) mehrere Speichereinheiten (1.20) aufweist und die Sprachdateien (1.10, 6.10) und die Wörterbuchdatei(en) (2.20) auf unterschiedlichen Speichereinheiten (1.20) gespeichert sind.

10. Sprachanalyseeinrichtung nach Anspruch 8 oder 9, **dadurch gekennzeichnet, dass** die Eingabeeinheit ein Spracherkennungssystem aufweist.

11. Sprachanalyseeinrichtung nach einem der Ansprüche 8 bis 10, **dadurch gekennzeichnet, dass** an das Rechnersystems ein Drucker (9.20) und/oder eine Anzeigeinheit (9.10) und /oder elektroakustischer Wandler (9.40) angeschlossen ist, um die Ausgabedatei (8.20) wiederzugeben.

## Claims

1. A method for automated language analysis based on word selection, comprising the steps:
a) preparing a computer system (1.30) by
aa) storing a plurality of reference language files (1.10) on a memory unit (1.20) of the computer system (1.30) in order to form a reference sample (1.40), wherein each reference language file (1.10) comprises a minimum number of 100 words, and all the reference language files (1.10) originate from different persons having known features,
ab) storing a dictionary file (2.20) containing at least 250 different categories (2.10) on a memory unit (1.20) of the computer system (1.30), wherein the stored dictionary file comprising the central vocabulary covers at least 95 % of the words contained in the language files and all the words in the dictionary file (2.20) are classified in at least one of the at least 250 categories (2.10),
ac) making an individual comparison of each reference language file (1.10) of the reference sample (1.40) with the dictionary file (2.20) by determining the percentage frequency (3.40) of the words in each reference language file (1.10) that are contained in each category (2.10) of the dictionary file (2.20),
ad) storing a set of rules (5.40) in a memory unit (1.20) of the computer system (1.30), which set of rules determines by means of statistical and/or algorithmic methods associations at least between the percentage frequencies (3.40) determined according to feature ac) in one or more categories (2.10) and at least one known feature (4.20) of the persons from whom the reference language files (1.10) originate,
b) following preparation of the computer system in accordance with features aa) - ad), recording and storing a language file (6.10), in addition to the reference language files (1.10) of the reference sample (1.40), in a memory unit (1.20) of the computer system (1.30), wherein each language file (6.10) and each reference language file is provided directly as a text file or an audio file that is converted into a text file by way of a transcription,
c) analyzing the language file (6.10) additionally recorded and stored according to feature b), by
ca) making an individual comparison of the language file (6.10) with the dictionary file (2.20) by determining the percentage frequency (7.30) of the words in the language file (6.10) that are contained in each category (2.10) of the dictionary file (2.20),
cb) processing the percentage frequencies (7.30) determined according to feature ca) with the aid of the set of rules (5.40), which examines by means of statistical and/or algorithmic methods the percentage frequencies (7.30) determined according to feature ca) for similarities with the percentage frequencies (3.40) determined according to feature ac), and classifies the language file (6.10) according to the established similarities, and assigns said file to at least one known feature exhibited by the persons from whom the reference language files (1.10) originate,
d) creating an output file (8.20), which contains features (4.20) assigned to the language file (6.10) according to feature cb),
e) outputting the output file (8.20),
wherein
ga) at least once during recording of the additional language file (6.10) according to feature b), a partial file of the language file (6.10) is buffered in the memory unit (1.20) of the computer system (1.30), wherein each additional language file (6.10) comprises at least 100 words,
gb) the buffered partial file is analyzed by
gba) making an individual comparison of the partial file with the dictionary file (2.20) by determining the percentage frequency (7.30) of the words in the partial file that are contained in each category (2.10) of the dictionary file (2.20),
gbb) processing the percentage frequencies (7.30) determined according to feature gba) with the aid of the set of rules (5.40), which examines by means of statistical and/or algorithmic methods the percentage frequencies (7.30) determined according to feature gba) for similarities with the percentage frequencies (3.40) determined according to feature ac), classifies the partial file according to the established similarities and assigns to at least one known feature exhibited by the different persons from whom the reference language files (1.10) originate,
gc) creating an interim output file, which contains features (4.20) assigned to the partial file according to feature gbb), and
gd) outputting the interim output file.

2. The method according to claim 1, **characterized by** the further steps:
fa) expanding the reference sample (1.40) according to feature aa) by adding as reference language files (1.10), additional language files (6.10) recorded according to step b),
fb) providing a feedback through an input, which allows an evaluation of the correctness of the assigned features by way of analysis of the language file according to feature c) and
fc) updating and re-saving the set of rules (5.40) taking into account the enlarged database according to feature ad).

3. The method according to claim 2, **characterized in that** only those additional language files (6.10) which comprise a specified minimum number of 100 words are added to the reference sample (1.40).

4. The method according to one of claims 1 to 3, **characterized in that** the output file and/or the interim output file contains personality traits and/or features relating to the psychological state of the person.

5. The method according to one of claims 1 to 4, **characterized in that** different dictionary files (2.20) are stored on the computer system (1.30) depending on the intended use of the method.

6. The method according to one of claims 1 to 4, **characterized in that** a plurality of dictionary files (2.20) with different content are stored on the computer system (1.30), which dictionary files can be used selectively.

7. The method according to one of claims 1 to 6, **characterized in that**
- the preparation of the computer system (1.30) according to feature a) additionally comprises recording and storing at least one additional item of information (2.30) of each reference language file (1.10), and the set of rules (5.40) is designed such that by means of statistical and/or algorithmic methods it also determines associations between the at least one additional item of information (2.30) and the known features (4.20) of the persons from whom the reference language files (1.10) originate,
- the subsequent recording and storage of a language file (6.10) according to feature b) additionally comprises recording and storing the at least one additional item of information (2.30) for each language file (6.10), and
- analyzing the language file (6.10) according to feature c) comprises in addition to processing the percentage frequencies determined according to feature ca), processing with the aid of the set of rules (5.40) at least one additional item of information of each recorded language file (6.10), wherein the set of rules (5.40) examines by means of the statistical and/or algorithmic methods the at least one additional item of information (2.30) of each language file for similarities with this at least one additional item of information (2.30) in the reference language files, and wherein the set of rules (5.40) classifies the language file (6.10), taking into account all the established similarities, and assigns said file to the occurrence of at least one known feature (4.20) exhibited by the different persons from whom the reference language files (1.10) originate,
- wherein the reference language file and the language file (1.10, 6.10) are each transcribed from an audio file, and prosodic information is extracted from the audio files as the additional information and/or morphological and/or syntactic information (2.40, 2.50) is extracted from each reference language file and from each language file (1.10, 6.10) as the additional information.

8. A language analysis device for automated language analysis based on word selection, comprising
- a computer system (1.30) having at least one memory unit (1.20),
- an input unit connected to the computer system (1.30),
- a program, which is stored on at least one memory unit (1.20), that is designed to execute a method according to one of claims 1 to 7 on the computer system (1.30).

9. The language analysis device according to claim 8, **characterized in that** the computer system (1.30) comprises a plurality of memory units (1.20), and the language files (1.10, 6.10) and the dictionary file(s) (2.20) are stored on different memory units (1.20).

10. The language analysis device according to claim 8 or 9, **characterized in that** the input unit comprises a voice recognition system.

11. The language analysis device according to one of claims 8 to 10, **characterized in that** a printer (9.20) and/or a display unit (9.10) and/or an electroacoustic transducer (9.40) are connected to the computer system in order to reproduce the output file (8.20).

## Revendications

1. Procédé d'analyse linguistique automatisé, basée sur une sélection de mots, comprenant les étapes consistant à :
a) préparer un système informatique (1.30) par
aa) mémorisation de plusieurs fichiers linguistiques de référence (1.10) sur une unité de mémoire (1.20) du système informatique (1.30), pour créer un échantillonnage de référence (1.40), chaque fichier linguistique de référence (1.10) comprenant un nombre minimal de 100 mots et tous les fichiers linguistiques de référence (1.10) provenant de différentes personnes, qui présentent des caractéristiques connues,
ab) mémorisation d'un fichier dictionnaire (2.20) comportant au moins 250 catégories différentes (2.10) sur une unité de mémoire (1.20) du système informatique (1.30), le fichier dictionnaire mémorisé qui englobe le vocabulaire centralisé couvrant au moins 95 % des mots contenus dans les fichiers linguistiques et tous les mots du fichier dictionnaire (2.20) étant classés dans au moins l'une des au moins 250 catégories (2.10),
ac) réalisation d'une comparaison individuelle de chaque fichier linguistique de référence (1.10) de l'échantillonnage de référence (1.40) avec le fichier dictionnaire (2.20) par détermination de la fréquence en pourcentage (3.40) des mots contenus dans chaque catégorie (2.10) du fichier dictionnaire (2.20) dans chaque fichier linguistique de référence (1.10),
ad) mémorisation d'un ensemble de règles (5.40) dans une unité de mémoire (1.20) du système informatique (1.30), qui par des méthodes statistiques et/ou algorithmiques détermine des relations au moins entre les fréquences en pourcentage (3.40) déterminées selon la caractéristique ac) dans une ou plusieurs catégories (2.10) et au moins une caractéristique connue (4.20) des personnes dont proviennent les fichiers linguistiques de référence (1.10),
b) saisir et mémoriser dans une unité de mémoire (1.20) du système informatique (1.30), à la suite de la préparation du système informatique selon les caractéristiques aa) - ad) un fichier linguistique (6.10), additionnellement aux fichiers linguistiques de référence (1.10) de l'échantillonnage de référence (1.40), chaque fichier linguistique (6.10) et chaque fichier linguistique de référence se présentant directement sous la forme d'un fichier texte ou d'un fichier audio que l'on convertit par voie de transcription en un fichier texte,
c) analyser le fichier linguistique (6.10) saisi additionnellement et mémorisé selon la caractéristique b) par
ca) réalisation d'une comparaison individuelle du fichier linguistique (6.10) avec le fichier dictionnaire (2.20) par détermination de la fréquence en pourcentage (7.30) dans le fichier linguistique (6.10) des mots contenus dans chaque catégorie (2.10) du fichier dictionnaire (2.20),
cb) traitement des fréquences en pourcentage (7.30) déterminées selon la caractéristique ca) à l'aide de l'ensemble de règles (5.40), qui par des méthodes statistiques et/ou algorithmiques examine les fréquences en pourcentage (7.30) déterminées selon la caractéristique ca) au niveau de leur analogie avec les fréquences en pourcentage (3.40) déterminées selon la caractéristique ac) et qui classifie le fichier linguistique (6.10) en fonction des analogies constatées et l'affecte à au moins une caractéristique connue que présentent les personnes dont proviennent les fichiers linguistiques de référence (1.10),
d) élaborer un fichier de sortie (8.20), qui contient les caractéristiques (4.20) affectées au fichier linguistique (6.10) selon la caractéristique cb),
e) éditer le fichier de sortie (8.20),
ga) pendant la saisie du fichier linguistique (6.10) additionnel selon la caractéristique b), au moins une fois un fichier partiel du fichier linguistique (6.10) étant mémorisé temporairement dans l'unité de mémoire (1.20) du système informatique (1.30), chaque fichier linguistique (6.10) additionnel comprenant au moins 100 mots,
gb) le fichier partiel mémorisé temporairement étant analysé par
gba) réalisation d'une comparaison individuelle du fichier partiel avec le fichier dictionnaire (2.20) par détermination de la fréquence en pourcentage (7.30) dans le fichier partiel des mots contenus dans chaque catégorie (2.10) du fichier dictionnaire (2.20),
gbb) traitement des fréquences en pourcentage (7.30) déterminées selon la caractéristique gba) à l'aide de l'ensemble de règles (5.40), qui par des méthodes statistiques et/ou algorithmiques examine les fréquences en pourcentage (7.30) déterminées selon la caractéristique gba) au niveau de leur analogie avec les fréquences en pourcentage (3.40) déterminées selon la caractéristique ac), classifie le fichier partiel en fonction des analogies constatées et l'affecte à au moins une caractéristique connue que présentent les différentes personnes dont proviennent les fichiers linguistiques de référence (1.10),
gc) élaborer un fichier de sortie provisoire qui contient des caractéristiques (4.20) affectées au fichier partiel selon la caractéristique gbb),
gd) éditer le fichier de sortie provisoire.

2. Procédé selon la revendication 1, **caractérisé par** les étapes additionnelles consistant à :
fa) élargir l'échantillonnage de référence (1.40) selon la caractéristique aa), par ajout selon la caractéristique b) de fichiers linguistiques (6.10) additionnels saisis en tant que fichiers linguistiques de référence (1.10),
fb) prévoir un message en retour par une saisie qui permet une évaluation de l'exactitude des caractéristiques affectées par voie de l'analyse du fichier linguistique selon la caractéristique c),
fc) mettre à jour et remémoriser l'ensemble de règles (5.40) sous considération de la base de données agrandie, conformément à la caractéristique ad).

3. Procédé selon la revendication 2, **caractérisé en ce que** ne sont rajoutés à l'échantillonnage de référence (1.40) que de tels fichiers linguistiques (6.10) additionnels qui présentent un nombre minimal fixé d'au moins 100 mots.

4. Procédé selon l'une quelconque des revendications 1 à 3, **caractérisé en ce que** le fichier de sortie et/ou le fichier de sortie provisoire comporte des caractéristiques de personnalité et/ou des caractéristiques de l'état psychique de la personne.

5. Procédé selon l'une quelconque des revendications 1 à 4, **caractérisé en ce qu'**on mémorise différents fichiers dictionnaires (2.20) sur le système informatique (1.30), en fonction des fins d'utilisation du procédé.

6. Procédé selon l'une quelconque des revendications 1 à 4, **caractérisé en ce que** le plusieurs fichiers dictionnaires (2.20) de différent contenu, qui sont utilisables au choix sont mémorisés sur le système informatique (1.30).

7. Procédé selon l'une quelconque des revendications 1 à 6, **caractérisé**
- **en ce que** la préparation du système informatique (1.30) selon la caractéristique a) comprend additionnellement la saisie et la mémorisation d'au moins une information (2.30) additionnelle de chaque fichier linguistique de référence (1.10) et en ce que l'ensemble de règles (5.40) est aménagé de sorte à déterminer par ailleurs, par des méthodes statistiques et/ou algorithmiques des relations entre l'au moins une information (2.30) additionnelle et les caractéristiques (4.20) connues des personnes dont proviennent les fichiers linguistiques de référence (1.10),
- **en ce que** la saisie et la mémorisation consécutives d'un fichier linguistique (6.10) selon la caractéristique b) comprend additionnellement la saisie et la mémorisation de l'au moins une information (2.30) supplémentaire pour chaque fichier linguistique (6.10), et
- **en ce que** l'analyse du fichier linguistique (6.10) selon la caractéristique c) comprend additionnellement au traitement des fréquences en pourcentage déterminées selon la caractéristique ca) à l'aide de l'ensemble de règles (5.40) un traitement de l'au moins une information additionnelle de chaque fichier linguistique (6.10) saisi, l'ensemble de règles (5.40) examinant avec les méthodes statistiques et/ou algorithmiques l'au moins une information (2.30) additionnelle de chaque fichier linguistique au niveau des analogies avec ladite au moins une information (2.30) additionnelle dans les fichiers linguistiques de référence et l'ensemble de règles (5.40) classifiant le fichier linguistique (6.10) en intégrant l'ensemble des analogies constatées et l'affectant à l'étendue d'au moins une caractéristique (4.20) connue que présentent les différentes personnes dont proviennent les fichiers linguistiques de référence (1.10),
- le fichier linguistique de référence et le fichier linguistique (1.10, 6.10) étant transcrits chacun à partir d'un fichier audio et en tant qu'informations additionnelles, des informations prosodiques étant extraites des fichiers audio et /ou en tant qu'informations additionnelles, des informations morphologiques et/ou des informations syntaxiques (2.40, 2.50) étant extraites de chaque fichier linguistique de référence et de chaque fichier linguistique (1.10, 6.10).

8. Dispositif d'analyse linguistique, destiné à l'analyse linguistique automatisée basée sur une sélection de mots, comprenant :
- un système informatique (1.30), comportant au moins une unité de mémoire (1.20),
- une unité de saisie connectée sur le système informatique (1.30),
- un programme mémorisé sur au moins une unité de mémoire (1.20), qui est aménagé pour réaliser un procédé selon l'une quelconque des revendications 1 à 7 sur le système informatique (1.30).

9. Dispositif d'analyse linguistique selon la revendication 8, **caractérisé en ce que** le système informatique (1.30) comporte plusieurs unités de mémoire (1.20) et **en ce que** les fichiers linguistiques (1.10, 6.10) et le(s) fichier(s) dictionnaire(s) (2.20) sont mémorisés sur différentes unités de mémoire (1.20).

10. Dispositif d'analyse linguistique selon la revendication 8 ou 9, **caractérisé en ce que** l'unité de saisie comporte un système de reconnaissance vocale.

11. Dispositif d'analyse linguistique selon l'une quelconque des revendications 8 à 10, **caractérisé en ce que** sur le système informatique est connecté(e) une imprimante (9.20) et/ou une unité d'affichage (9.10) et/ou un convertisseur électro-acoustique (9.40), pour restituer le fichier de sortie (8.20).
